# EUROPÄISCHE PATENTSCHRIFT

(11) **EP 3 159 288 B1**
(45) Veröffentlichungstag und Bekanntmachung des Hinweises auf die Patenterteilung: **06.03.2019**
(21) Anmeldenummer: 15002966.8
(22) Anmeldetag: 19.10.2015
(51) Int. Cl.: B65G 17/06

(54) **SORTIERFÖRDERER**
SORTING CONVEYOR
CONVOYEUR DE TRI

(43) Veröffentlichungstag der Anmeldung: 26.04.2017
(73) Patentinhaber: BEUMER Group GmbH & Co. KG, 59269 Beckum (DE)
(72) Erfinder: Jesper, Jan Josef, 34431 Marsberg (DE); Hermans, Hendrik, 48151 Münster (DE)
(74) Vertreter: Philipp, Matthias

(56) Entgegenhaltungen:
- EP-A1- 1 602 604
- EP-A1- 2 218 661
- WO-A1-2009/128706
- DE-C- 966 679
- FR-A- 749 281
- GB-A- 587 791
- US-A- 3 513 965
- US-A- 3 627 109
- US-A- 4 351 429

## Beschreibung

Die Erfindung betrifft einen Sortierförderer nach dem Oberbegriff der Ansprüche 1 und 2, wie er aus der EP-A-2 218 661 B1 bekannt ist.

Der bekannte Sortierförderer hat sich in der Praxis bestens bewährt, wobei sich jedoch herausgestellt hat, dass die bei dem bekannten Sortierförderer und auch bei zahlreichen anderen bekannten Sortierförderern, wie sie etwa aus EP 0 700 844 B1 oder EP 0 739 831 B1 bekannt sind, verwendeten Zwischenabdeckungen, die eine Lücke zwischen zwei benachbarten Lastaufnahmeelementen überdecken, verbesserungswürdig sind. Alle bekannten Zwischenabdeckungen sind jeweils an einem Lastaufnahmeelement befestigt, so dass der Nachteil besteht, dass eine Zwischenabdeckung an ihrem auskragenden Ende nicht von unten abgestützt ist. Damit können schwere Stückgüter, beispielsweise Gepäckstücke, nur begrenzt transportiert werden, da die Zwischenabdeckungen nur eine begrenzte Stabilität aufweisen.

Weiterhin ist nachteilig, dass die Relativbewegung zwischen einer Zwischenabdeckung und dem benachbarten, relativ dazu beweglichen Lastaufnahmeelement bei Kurvenfahrten relativ groß ist, so dass trotz der Anordnung einer Zwischenabdeckung immer noch ein Risiko besteht, dass kleine Stückgutteile oder kleine, dünne Teile eines Stückgutteils wie beispielsweise Gurte, Schnallen etc. von Gepäckstücken unbeabsichtigt zwischen eine Zwischenabdeckung und ein Lastaufnahmeelement geraten und eingeklemmt werden können. Außerdem offenbart FR 74 92 81 A einen Förderer nach dem Oberbegriff der Ansprüche 1 und 2.

Zur Lösung dieser Aufgabe schlägt die Erfindung eine Bauweise vor, bei der auf der Trag- bzw. Führungseinheit eine Zwischenabdeckung gehalten ist, mit der der Zwischenraum zwischen den Lastaufnahmeelementen wenigstens teilweise abgedeckt ist. Die Zwischenabdeckung bewegt sich relativ zu beiden Lastaufnahmeelementen, sobald sich der durchfahrene Krümmungsradius der Fahrbahn ändert.

Durch die erfindungsgemäße Anordnung der Zwischenabdeckung auf der Führungseinheit werden zugleich zwei wesentliche Vorteile gegenüber dem Stand der Technik erzielt. Zunächst einmal ist die Zwischenabdeckung auf der darunter befindlichen Führungseinheit abgestützt, so dass ihr Lastaufnahmevermögen gegenüber einer bekannten Anbringung an einem der Lastaufnahmeelemente erheblich vergrößert ist. Weiterhin ist die Relativdrehung der Zwischenabdeckung gegenüber den benachbarten Lastaufnahmeelementen, da sie gleich der Relativdrehung der Führungseinheit ist, in etwa nur halb so groß wie die Relativdrehung einer fest an einem Lastaufnahmeelement angebrachten Zwischenabdeckung relativ zu dem gegenüberliegenden Lastaufnahmeelement.

Das Koppelgelenk kann bevorzugt um eine senkrecht zu einer Fahrbahnebene verlaufende Schwenkachse schwenkbar sein. Alternativ kann es in mehrere Richtungen drehbar sein.

Bevorzugt ist die Zwischenabdeckung so groß, dass sie den Zwischenraum an jeder Stelle beim Durchfahren der Fahrbahn, also auch in einer Kurve der Fahrbahn mit einem kleinsten Kurven- oder Krümmungsradius, vollständig abdeckt.

Erfindungsgemäß umfasst die Zwischenabdeckung ein Abdeckelement, das an einer auf der Führungseinrichtung befestigten, starren Grundplatte gehalten ist, wobei das Abdeckelement mindestens bereichsweise von der Grundplatte vorsteht. Das Abdeckelement weist bevorzugt seitliche, oberhalb der Trag- und Führungsrollen liegende Ränder auf, deren Kontur einem Kreisbogen um einen insbesondere mittig zwischen den Tragrollen gelegenen Punkt entspricht, in der Draufsicht gesehen. Das Abdeckelement ist erfindungsgemäß flexibel ausgebildet.

Die Grundplatte kann in Richtung der Schwenkachse gesehen, d.h. senkrecht zur Fahrbahnebene, einen rautenförmigen Grundriss aufweisen. Insbesondere ist vorgesehen, dass die Grundplatte senkrecht zur Schwenkachse angeordnet ist, d. h. parallel zur Fahrbahnebene.

Bei einer Grundplatte mit rautenförmigem Grundriss kann vorgesehen sein, dass ein Seitenrand der Grundplatte bezüglich einer Längsrichtung der Führungseinrichtung unter einem Winkel von weniger als 90 Grad angeordnet ist, wobei der Winkel einer größten Relativdrehung der Führungseinrichtung bezüglich einer benachbarten Trageinheit bei Kurvenfahrt entspricht, d.h. beim Durchfahren einer Kurve mit einem kleinsten Kurvenradius.

Erfindungsgemäß ist das Abdeckelement an seinem von der Grundplatte vorstehenden Endbereich in Aufnahmeschlitzen benachbarter Lastaufnahmeelemente aufgenommen und abgestützt.

Die Fahrbahn kann horizontale und/oder vertikale Krümmungen aufweisen. Beim Durchfahren einer horizontalen Krümmung oder Kurve gelangt das Abdeckelement mit seiner einen oder anderen Seite in Überlagerung mit den benachbarten Lastaufnahmeelementen, während es beim Durchfahren einer vertikalen Krümmung oder Kurve in seinen von der Grundplatte vorstehenden Bereichen einer entsprechenden Biegung unterworfen wird und dann selbstverständlich flexibel sein muss.

Es kann vorgesehen sein, dass das Verbindungsgelenk und das Koppelgelenk jeweils an Längspositionen außerhalb eines Bereiches zwischen der ersten und der zweiten Längsposition der Führungsrollen, an diesen Längspositionen oder an einer übereinstimmenden Längsposition mittig dazwischen angeordnet sind.

Bei der erstgenannten Variante kann in vorteilhafter Weise erreicht werden, dass die Führungseinheiten und die Trageinheiten übereinstimmende Längen aufweisen, so dass der Polygoneffekt minimiert wird. Dies ist dann der Fall, wenn das Verbindungsgelenk und das Koppelgelenk einer jeden Führungseinheit an Längspositionen in gleichen Abständen vor und hinter der Längsposition der Tragrollen angeordnet sind und einen ersten gegenseitigen Abstand aufweisen, und Verbindungs- und Koppelgelenke einer jeden Trageinheit einen gegenseitigen Abstand aufweisen, der mit dem ersten gegenseitigen Abstand übereinstimmt.

Bei allen Varianten kann bevorzugt vorgesehen sein, dass die Tragrollen einer Führungseinheit um eine gemeinsame horizontale Drehachse, d.h. senkrecht zu der Schwenkachse, drehbar sind. Außerdem ist bevorzugt vorgesehen, dass jede Tragrolle mittig zwischen zwei unmittelbar benachbarten Führungsrollen angeordnet ist. Damit kann eine erste Führungsrolle an einer ersten Längsposition mit Abstand vor und eine zweite Führungsrolle mit gleichem Abstand hinter einer jeweiligen Tragrolle angeordnet sein.

Weiterhin ist es zweckmäßig, wenn die Führungsrollen um vertikale Drehachsen drehbar sind, d.h. parallel zur Schwenkachse des Verbindungsgelenks.

Es kann zweckmäßig sein, wenn die Führungsrollen einer Führungseinheit in einem Längsabstand angeordnet sind, der kleiner ist als ein Querabstand der Führungsrollen senkrecht zur Förderrichtung gesehen.

Bevorzugt ist vorgesehen, dass die Führungsrollen der Führungseinheit in gleicher Höhe wie der Drehpunkt des Verbindungsgelenkes angeordnet werden. Dadurch wird vermieden, dass in horizontalen Kurven die aus den Kettenzugkräften resultierenden Querkräfte zu einem auf den Fahrwagen wirkenden Kippmoment führen.

Bevorzugt ist weiterhin vorgesehen, dass die Führungsrollen einer Führungseinheit in gleicher Höhe wie die Drehachsen der Tragrollen angeordnet sind.

Es kann vorgesehen sein, dass die Tragrollen motorisch antreibbar sind. Alternativ kann vorgesehen sein, dass die Führungseinheiten und/oder die Trageinheiten ein Reaktionsteil zur Übertragung von Antriebskräften durch Reibrad- oder Linearantrieb aufweisen. Das Reaktionsteil kann in Form eines Stators oder eines Antriebsteils eines Linearmotors ausgebildet sein, wobei das jeweils andere Antriebselement im Bereich der Fahrbahn feststehend angeordnet ist oder durch diese gebildet wird.

Hierbei besteht die Möglichkeit, dass die Reaktionsteile als flache, senkrecht und in Förderrichtung orientierte Bauteile gebildet sind, deren in Förderrichtung weisende Enden im Bereich eines Verbindungsgelenks kreissegmentförmig abgerundet sind und einen engen Spalt zu einem benachbarten Reaktionsteil bilden.

Zweckmäßigerweise ist vorgesehen, dass auf jedem Fahrwagen mindestens ein Lastaufnahmeelement angeordnet ist. Die Lastaufnahmeelemente können mechanisch oder elektrisch betätigte Kippelemente oder Quergurtelemente sein. Soweit die Lastaufnahmeelemente als Kippelemente ausgebildet sind, muss dafür gesorgt sein, dass die Zwischenabdeckungen eine ausreichende Flexibilität besitzen, um durch ein abkippendes Kippelement nicht beschädigt zu werden.

Weitere Vorteile und Merkmale der Erfindung ergeben sich aus der nachfolgenden Beschreibung von bevorzugten Ausführungsformen, wobei
Fig. 1 einen Teilbereich eines erfindungsgemäßen Sortierförderers ohne Lastaufnahmeelemente in einer perspektivischen Ansicht schräg von oben zeigt,
Fig. 2 einen Ausschnitt des Sortierförderers nach Fig. 1 in einem vergrößerten Maßstab zeigt,
Fig. 3 einen Teilbereich eines erfindungsgemäßen Sortierförderers in einer Ansicht von unten zeigt,
Fig. 4 den Teilbereich des Sortierförderers nach Fig. 3 von oben zeigt,
Fig. 5 einen Fahrwagen eines erfindungsgemäßen Sortierförderers in einer schematischen Skizze zeigt,
Fig. 6a-c drei unterschiedliche Ausführungsformen der Erfindung erläutern,
Fig. 7 den Einfluss der Fahrwagengeometrie auf den Polygoneffekt erläutert,
Fig. 8a-c bevorzugte Ausführungsformen der Erfindung bei Durchfahren einer Vertikalkurve erläutern,
Fig. 9 schematisch die Anbringung eines Montageelementes auf einer Führungseinheit 8 zeigt,
Fig. 10 schematisch die Anbringung einer Grundplatte auf dem Montageelement nach Fig. 9 zeigt,
Fig. 11 eine Zwischenabdeckung mit einem flexiblen Abdeckelement zeigt, dass auf eine Grundplatte gem. Fig. 10 angebracht ist,
Fig. 12 die Anordnung eines Lastaufnahmeelements mit einer Zwischenabdeckung zeigt,
Fig. 13 die Anordnung von zwei benachbarten Lastaufnahmeelementen mit einer Zwischenabdeckung zur Abdeckung des dazwischen befindlichen Spaltes oder Zwischenraums zeigt,
Fig. 14 in einer Draufsicht die Relativpositionen einer Führungseinheit, zweier benachbarter Trageinheiten mit darauf angeordneten Lastaufnahmeelementen und einer dazwischen angeordneten Zwischenabdeckung bei geradlinigem Verlauf der Förderbahn zeigt, und
Fig. 15 die in Fig. 14 dargestellte Anordnung bei einem kurvenförmigen Verlauf der Förderbahn zeigt.

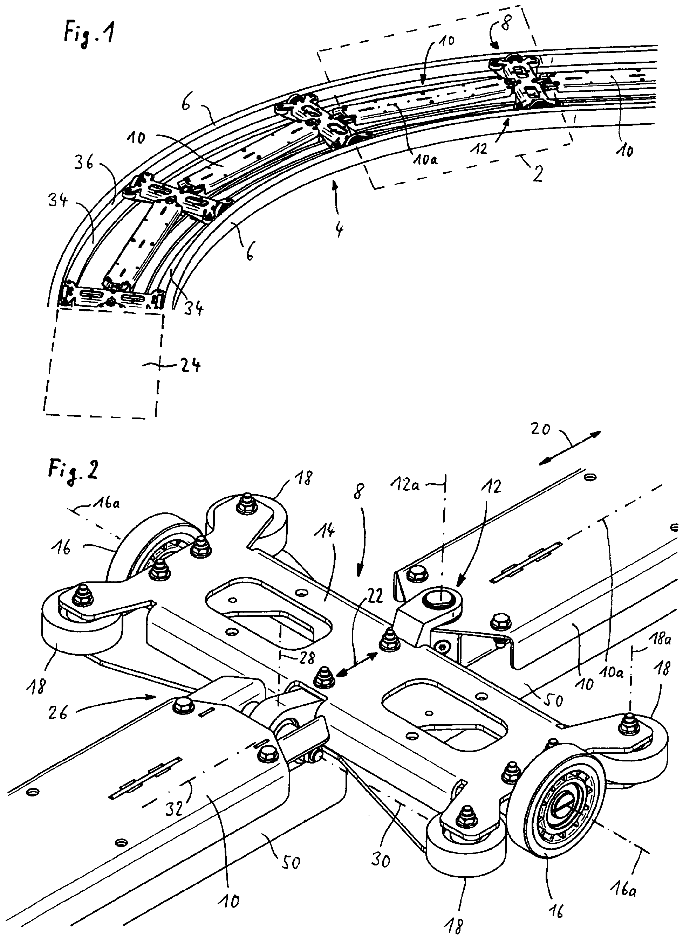

Zunächst wird auf Fig. 1 bis 5 Bezug genommen. Der dargestellte Sortierförderer enthält eine Reihe von gelenkig miteinander verbundenen Fahrwagen 2, die entlang einer Fahrbahn 4 geführt und verfahrbar sind, welche vorliegend durch zwei parallel zueinander verlegte Fahrschienen 6 gebildet ist.

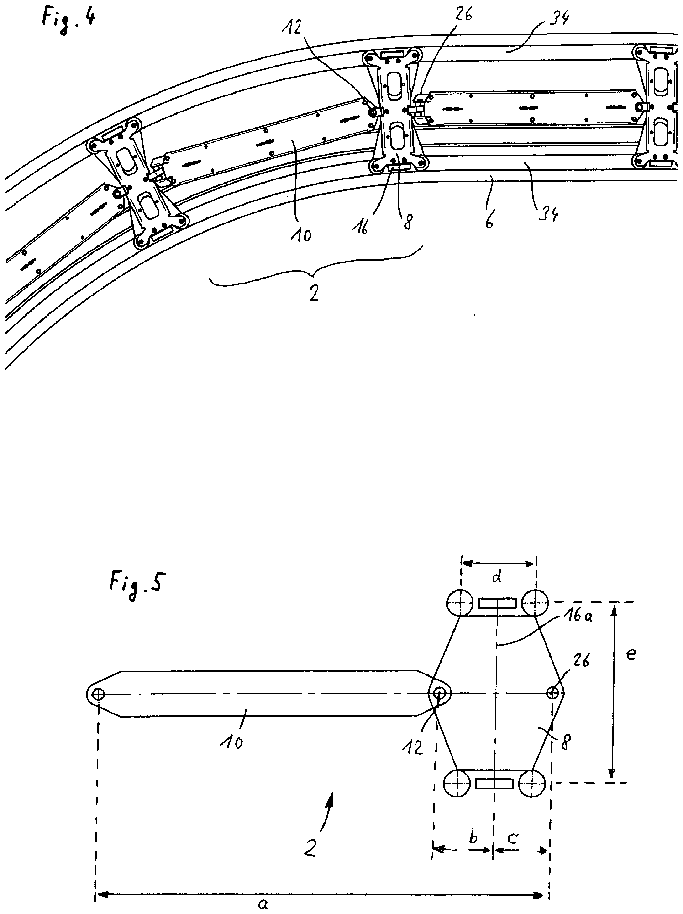

Jeder Fahrwagen umfasst zwei gelenkig miteinander verbundene Elemente, nämlich eine Führungseinheit 8 und eine Trageinheit 10, die mittels eines Koppelgelenks 12 miteinander verbunden sind. Das Koppelgelenk 12 weist hier eine vertikal verlaufende Schwenkachse 12a auf und ermöglicht somit eine schwenkende Relativbewegung von Führungseinheit 8 und Trageinheit 10 zueinander um die genannte Schwenkachse 12a (Fig. 2 zeigt aus Darstellungsgründen eine Ansicht von hinten in Fig. 1 oder 4, um das weiter unten beschriebene Verbindungsgelenk besser zeigen zu können). Alternativ ist eine Verdrehbarkeit des Koppelgelenks 12 in mehrere Richtungen denkbar.

Die Führungseinheit 8 besteht aus einem quer zur Fahrtrichtung orientierten Wagenkörper 14, an dessen äußeren Enden jeweils eine Tragrolle 16 mit horizontaler Drehachse 16a und zwei Führungsrollen 18 mit vertikaler Drehachse 18a angeordnet sind. Die Drehachsen 16a der beiden Laufräder 16 stimmen miteinander überein bzw. fluchten miteinander, wobei sie senkrecht zu der Schwenkachse 12a des Koppelgelenks 12 orientiert sind. In einer alternativen Ausführungsform besteht die Möglichkeit, dass die Drehachsen 16a einen Winkel zueinander aufweisen, also die Tragrollen 16 nach innen oder außen schräg stehend angeordnet sind, wobei ihre Drehachsen in einer senkrecht zur lokalen Fahrtrichtung 20 der Führungseinheit 8 bzw. des Förderers und parallel zur Schwenkachse 12a liegenden Ebene angeordnet.

In einer Variante können auch die Drehachsen der Führungsrollen 18 unter einem Winkel zur Vertikalen angeordnet sein, so dass die Führungsrollen schräg stehend angeordnet sind, wobei auch hier zur Vermeidung übermäßiger Reibung und Reduzierung von Verschleiß ihre Drehachsen selbstverständlich in einer senkrecht zur Fahrtrichtung 20 orientierten Ebene liegen sollten.

In einer bevorzugten Ausführungsform ist die Anordnung allerdings wie dargestellt, d.h. die Tragrollen haben eine gemeinsame Drehachse 16a, die senkrecht zur Schwenkachse 12a und zu den untereinander parallelen Drehachsen 18a der Führungsrollen 18 verläuft. Eine Längsrichtung 22 der Führungseinheit 8 verläuft quer zu den Drehachsen 16a und in einer Fahrbahnebene 24, die mit der lokalen Orientierung der Fahrbahn 4 bzw. der Fahrschienen 6 übereinstimmt.

Je zwei benachbarte Fahrwagen 2 sind mittels eines Verbindungsgelenks 26 gelenkig miteinander verbunden. Das Verbindungsgelenk 26 ist als Kreuzgelenk oder Gelenklager ausgebildet und ermöglicht eine Verdrehung der dadurch verbundenen Elemente, nämlich Führungseinheit 8 eines Fahrwagens und Trageinheit 10 eines benachbarten Wagens, in allen Richtungen (Hochachse 28, Querachse 30 und Längsachse 32). Dadurch können die Fahrwagen nicht nur horizontale, sondern auch vertikale Kurven sowie einen schraubenförmigen Kurvenverlauf (Wendelkurven) problemlos durchlaufen.

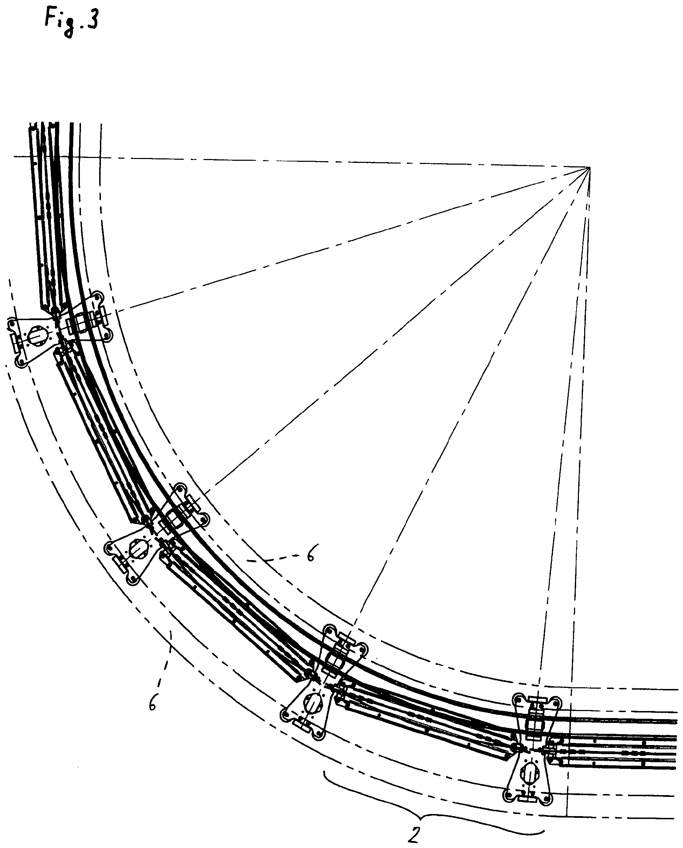

Wie insbesondere Fig. 1 erkennen lässt, weisen die Fahrschienen 6 jeweils eine Tragbahn 34 auf, auf der die Tragrollen 16 abrollen, sowie eine dazu senkrechte Führungsbahn 36, entlang der die Führungsrollen 18 laufen. Obere, den Tragbahnen 34 mit festem Abstand gegenüberstehend angeordnete Abhebesicherungen sind der Einfachheit halber nicht dargestellt. Durch die vier Führungsrollen 18 wird somit die eng zwischen den Führungsschienen 6 geführte Führungseinheit 8 stets so ausgerichtet, dass die Tragrollen 16 auch in Kurven ideal in Fahrtrichtung 20 geführt werden. Die auf einer Linie liegenden Drehachsen 16a der Tragrollen 16 fluchten stets durch den Kurvenmittelpunkt der lokalen Fahrbahnkrümmung, wie auch Fig. 3 zeigt. Durch den Entfall von nachlaufenden, schwenkbeweglich geführten Tragrollen des Stands der Technik können die Tragrollen auf einer eng begrenzten Spur geführt werden, so dass die Tragbahnen 34 entsprechend schmal gestaltet werden können.

Die Tragbahnen 34 legen die Fahrbahnebene 24 fest, zu der die Schwenkachse 12a sowie die Drehachsen 18a senkrecht und die Drehachse 16a parallel verlaufen.

Durch die feste Anbindung der Tragrollen an die Führungseinheit ist ein reversierender Betrieb des Sortierförderers problemlos möglich.

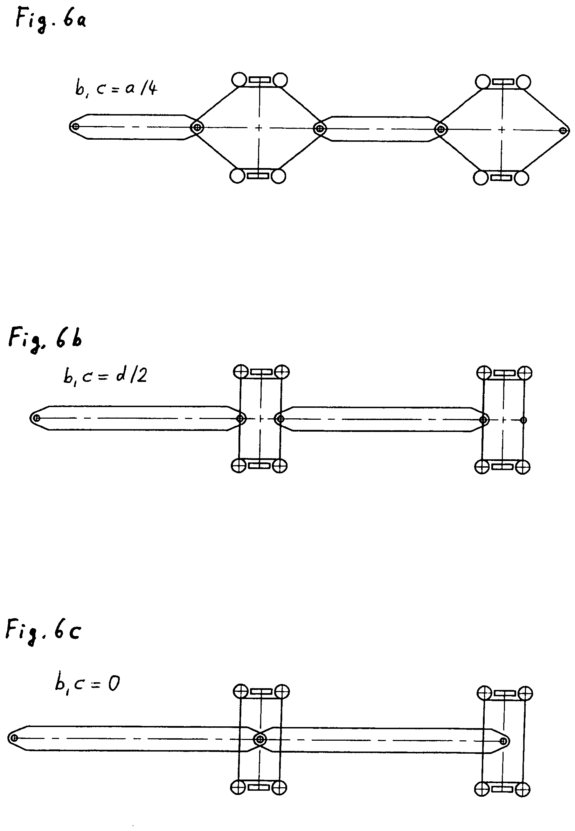

Anhand Fig. 5 und 6 werden nachfolgend drei bevorzugte Ausführungsvarianten erläutert. Fig. 5 zeigt einen Fahrwagen 2, bestehend aus einer Führungseinheit 8 und einer Trageinheit 10, die an dem Koppelgelenk 12 miteinander verbunden sind. Die Führungseinheit 8 weist gegenüberliegend zu dem Koppelgelenk 12 ein Verbindungsgelenk 26 zum Zusammenwirken mit der Trageinheit eines weiteren Führungswagens auf. Die entsprechenden Gelenkpunkte des Verbindungsgelenks 26 und der Trageinheit 10 weisen im gestreckten Zustand gemäß Fig. 5 einen gegenseitigen Abstand a auf, welcher der Fahrwagenteilung entspricht. Das Koppelgelenk 12 ist in einem Koppelgelenkabstand b von der gemeinsamen Drehachse 16a der Tragrollen 16 angeordnet, und das Verbindungsgelenk 26 weist von der Drehachse 16a einen Verbindungsgelenkabstand c auf. Die Führungsrollen 18 sind in einem Führungsrollenabstand d in Längsrichtung voneinander angeordnet, und weisen quer zur Längs- oder Förderrichtung 20 gesehen einen gegenseitigen Achs-Querabstand e auf.

Fig. 6 zeigt drei bevorzugte Ausführungsvarianten im Einzelnen. In einer ersten Variante (Fig. 6a) betragen die Koppelgelenk- und Verbindungsgelenkabstände b, c jeweils ein Viertel des Gelenkpunktabstands bzw. der Fahrwagenteilung a, so dass die Länge der Führungs- und Trageinheiten 8, 10 zwischen den jeweiligen Gelenken übereinstimmt und jeweils die Hälfte der Fahrwagenteilung a beträgt. Diese Ausführung ermöglicht eine maximale Reduzierung des Polygoneffektes.

Die Bauweise nach Fig. 6a ermöglicht eine Reduzierung der Anzahl der Bauteile, insbesondere auch der Trag- und Führungsrollen, sowie neben einem Kostenvorteil auch eine Reduzierung der Laufgeräusche.

Fig. 6b zeigt eine Ausführungsvariante, bei der das Koppelgelenk und das Verbindungsgelenk jeweils auf einer Verbindungslinie zwischen zwei in Querrichtung gegenüberliegenden Führungsrollen angeordnet sind. Diese Ausführung bietet den Vorteil, dass sich die Gelenkpunkte, nämlich Koppelgelenk und Verbindungsgelenk, nur minimal von der Mittellinie der Sortergerüstkurve, d.h. der Mitte zwischen den Tragbahnen 34 der Führungsschienen 6, entfernen. Die in der Sorterkette überwiegend vorherrschenden Zugkräfte stabilisieren den Fahrwagen in seiner Ausrichtung innerhalb der Fahrbahn.

Fig. 6c zeigt eine weitere Variante, bei der beide Gelenkpunkte, nämlich Koppelgelenk und Verbindungsgelenk, in einem Punkt zusammenfallen, vorzugsweise auf der Drehachse 16a der Tragrollen. Auch bei dieser Ausführung lässt sich der Polygoneffekt im Vergleich zu einem Fahrwagen herkömmlicher Bauweise reduzieren. Darüber hinaus kann durch das Zusammenfallen der Gelenkpunkte die Anzahl der Bauteile reduziert werden.

Bei allen Ausführungsvarianten besteht die Möglichkeit, die Koppelgelenke 12 und/oder die Verbindungsgelenke 26 in der gleichen Höhe wie die Führungsrollen 18 anzuordnen. Dadurch führt die in Horizontalkurven auftretende Querkraft, die durch die in der Fahrwagenkette bestehenden Zug- oder Druckkräfte hervorgerufen wird, nicht oder nur zu einem minimalen auf den Fahrwagen wirkenden Kippmoment, so dass vermieden wird, dass die Tragrollen von der Fahrschiene abheben und an einer oberen Aushebesicherung anlaufen. Dadurch bedingter Verschleiß und Geräuschentwicklung werden vermieden.

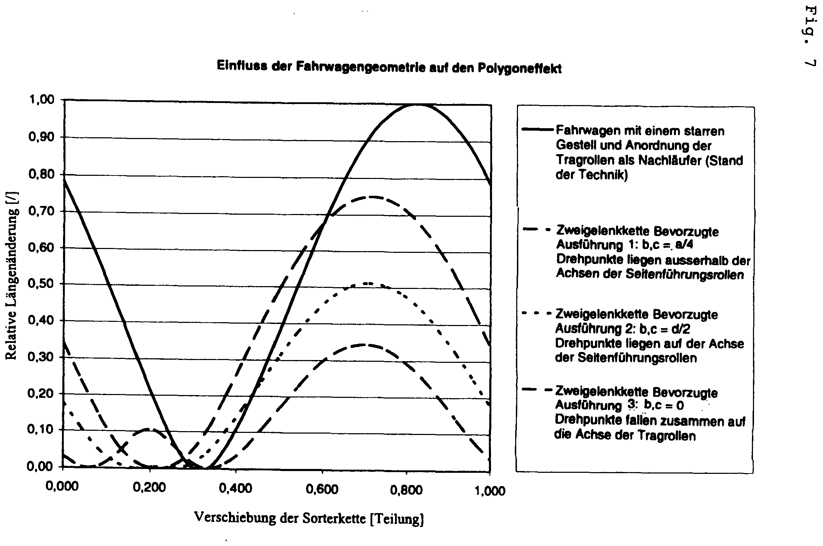

Untersuchungen haben gezeigt, dass der Polygoneffekt und die mit diesem einhergehenden Nachteile bei der erfindungsgemäßen Bauart eines Sortierförderers gegenüber einer Fahrwagenkette mit Fahrwagen aus einem starren Gestell, bei dem die Tragrollen als Nachläufer angeordnet sind, deutlich geringer ausfällt. Dies ist in Fig. 7 erläutert, die den Einfluss der Fahrwagengeometrie auf den Polygoneffekt verdeutlicht.

Die Führungseinheiten und die Trageinheiten können Oberseiten aufweisen, die in gleicher Höhe oberhalb der Tragbahn 34 liegen, so dass die Positionierung der Lastaufnahmeelemente in nahezu beliebiger Position auf dem Fahrwagen erleichtert wird.

Wegen der nicht unerheblichen Längenausdehnung großer Anlagen als Folge von Temperaturschwankungen sind die Fahrschienen und die Zugkräfte aufnehmenden Elemente der die Sorterkette bildenden Fahrwagen aus Materialien mit möglichst gleichen Längenausdehnungskoeffizienten, idealerweise aus dem gleichen Material, z.B. Stahl oder Aluminium, ausgeführt. Unterschiedliche Längenausdehnungen von Fahrschiene und Sorterkette würden nämlich zu Veränderungen der eingestellten Kettenvorspannung führen, wodurch das Laufverhalten und insbesondere Geräuschentwicklung und Verschleißverhalten negativ beeinflusst würden. Das Gestell der Führungseinheit kann aus alternativen Werkstoffen, z.B. auch Kunststoff, bestehen. Die Zugkraft vom Koppelgelenk zum Verbindungsgelenk wird dann gegebenenfalls durch ein zusätzliches, die Führungseinheit durchdringendes Bauteil geleitet, das gleiche Materialeigenschaften aufweist wie die Führungsschienen.

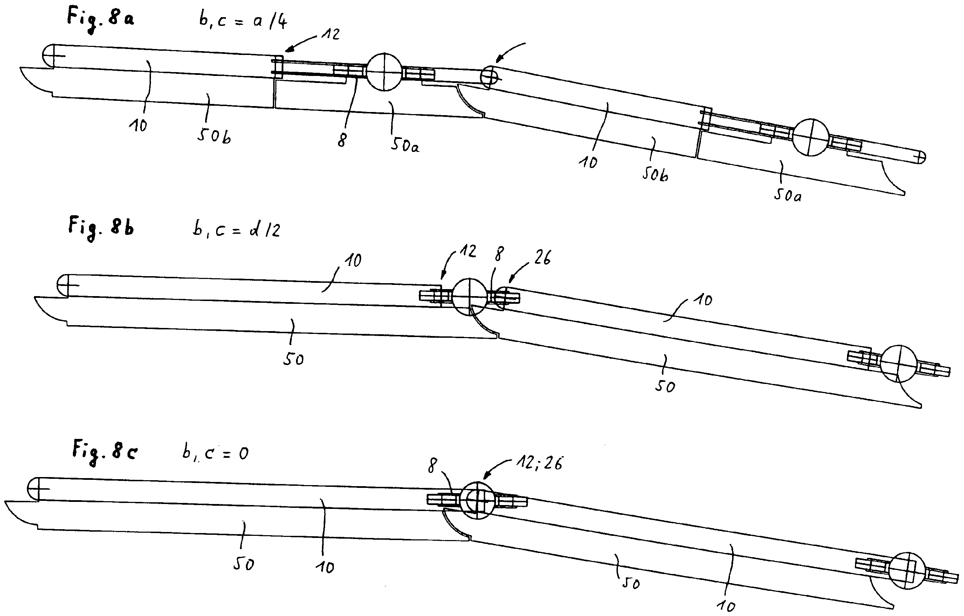

In einer bevorzugten Ausführung (Fig. 8) werden zur Einleitung von Vorschub- bzw. Antriebskräften und damit zur Bewegung der Fahrwagen flache Reaktionsteile 50 bzw. 50a, b, z.B. Aluminiumbleche, vertikal und mittig an den Führungs- und/oder Trageinheiten angebracht. Diese tragen nicht zur Übertragung der in der Sorterkette herrschenden Zugkraft bei. Die Anbindung der Reaktionsteile wird dabei so gestaltet, dass sich diese bei Erwärmung durch das Antriebssystem, z.B. Linearantrieb oder Reibräder, ohne Rückwirkung auf die strukturellen, Zug-/Druckkräfte aufnehmenden Bauteile des Fahrwagens ausdehnen können.

Wie Fig. 8 weiter zeigt, werden die zum Durchfahren von Horizontal- und Vertikalkurven erforderliche Spalte zwischen aneinander grenzenden Reaktionsteilen von benachbarten Fahrwagen so ausgeführt, dass die die Länge bestimmenden Konturen im wesentlichen einen konstanten Radius um den Gelenkpunkt des benachbarten Verbindungsgelenks aufweisen. Im Bereich eines Koppelgelenks befindet sich aufgrund der vertikalen Schwenkachse ein gerader, vertikaler Spalt. Durch diese Ausführung können die Spaltmaße und somit die für das Antriebssystem relevanten Unterbrechungen minimiert werden.

Fig. 8a zeigt eine Ausführungsvariante entsprechend Fig. 6a mit relativ weit voneinander beabstandeten Gelenkpunkten von Koppel- und Verbindungsgelenken. Hierbei bietet es sich an, zwei Reaktionsteile 50a, b vorzusehen, eines der unter der Führungseinheit 8 und eines unter der Trageinheit 10, die einander im Bereich des Koppelgelenks mit einem vertikalen Spalt gegenüberstehen. Im Bereich der Verbindungsgelenke 26 sind wie vorstehend beschrieben kreisförmige Konturen mit einem kreisringförmigen Spalt dazwischen vorgesehen.

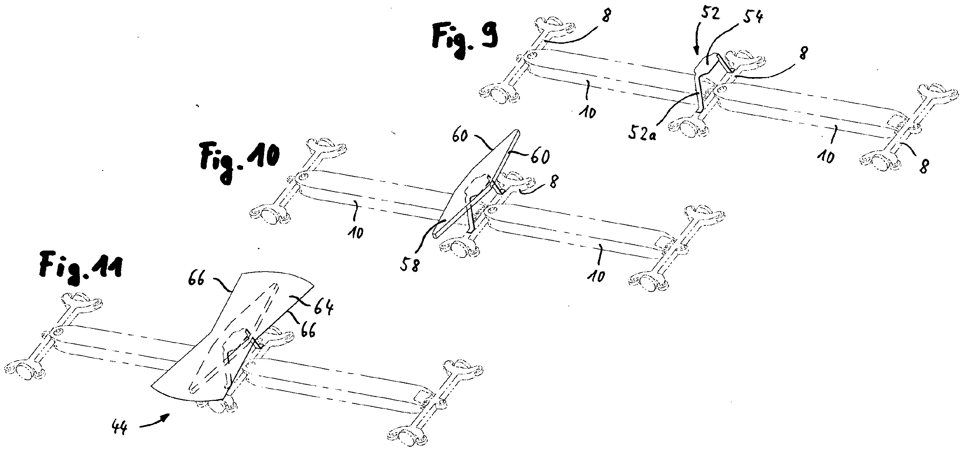

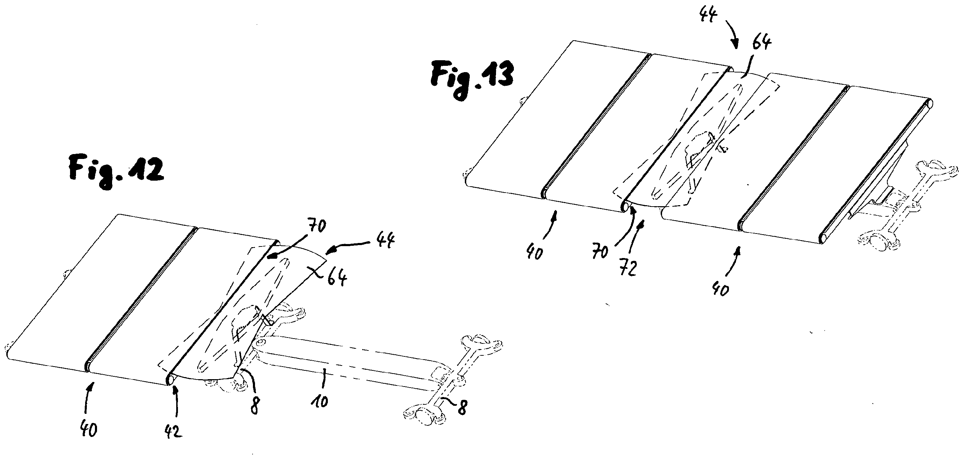

Bei einer Bauart gemäß Fig. 6b oder 6c (Fig. 8b, c) genügt es, wenn lediglich unterhalb der Trageinheit ein Reaktionsteil 50 angeordnet ist, da dessen Enden bei Kurvenfahrt nur wenig seitlich ausschwenken, vorausgesetzt, dass bei einer Bauart gemäß Fig. 6b die Trageinheit eine deutlich größere Länge als die Führungseinheit aufweist (Koppelgelenk- und Verbindungsgelenkabstände b, c sind relativ klein im Vergleich zur Fahrwagenteilung a). In Fig. 2, wo eine Anordnung gemäß Fig. 8b dargestellt ist, sind die Reaktionsteile 50 ebenfalls zu erkennen. Fig. 9 bis 11 zeigen die Befestigung einer Zwischenabdeckung 44 auf einer Führungseinheit 8, die sich zwischen zwei Trageinheiten 10 befindet, auf denen jeweils ein in Fig. 13 bis 15 dargestelltes Lastaufnahmeelement 40 gehalten ist. Auf dem Wagenkörper 14 (vergleiche Fig. 2) der Führungseinheit 8 ist ein Montageelement 52 gehalten, wobei jeweils eine Strebe 52a des Montageelements 52 an der Führungseinheit 8 befestigt und mit einer Tragplatte 54 des Montageelements 52 verbunden ist. Die Tragplatte 54 ist horizontal bzw. parallel zu der Fahrbahnebene 24 angeordnet.

Fig. 10 zeigt die Befestigung einer Grundplatte 58 auf der Tragplatte 54, wobei die Grundplatte 58 ebenfalls parallel zur Fahrbahnebene 24 angeordnet ist. Die Grundplatte 58 ist in der Draufsicht, d. h. senkrecht zur Fahrbahnebene 24 gesehen, rautenförmig mit Seitenrändern 60, die bezüglich der Längsrichtung 22 der Führungseinheit 8, die quer zu den Drehachsen 16a verläuft, unter einem Winkel 62 von weniger als 90° angeordnet sind. Der Winkel 62 entspricht einer größten Relativdrehung der Führungseinrichtung 8 bezüglich einer benachbarten Trageinheit 10 bei einer Kurvenfahrt mit kleinstem Radius. Beim Durchfahren einer derartigen Kurve mit kleinstem Radius sind somit die der Führungseinheit 8 benachbarten Trageinheiten 10 mit ihren Längsachsen 10a senkrecht zu den Seitenrändern 60 der Grundplatte 58 ausgerichtet.

Fig. 11 zeigt die Anbringung eines flexiblen Abdeckelements 64 auf der Grundplatte 58, wobei das flexible Abdeckelement 64 in allen Richtungen über die Seitenränder 60 der Grundplatte 58 vorsteht. Das Abdeckelement 64 weist jeweils benachbart zu den Seitenrändern 60 Seitenränder 66 auf, die mit benachbarten Seitenrändern 60 der Grundplatte 58 jeweils einen Winkel 68 einschließen, der gleich dem Winkel 62 zwischen Längsrichtung 22 und Seitenrändern 60 der Grundplatte 58 ist.

Wie Fig. 12 und 13 zeigen, sind im zusammengesetzten Zustand die über die Grundplatte 58 vorstehenden Bereiche des flexiblen Abdeckelements 64 in Aufnahmeschlitzen 70 der benachbarten Lastaufnahmeelemente 40 aufgenommen und dadurch gegen Durchbiegung nach unten abgestützt. Wie insbesondere Fig. 13 zeigt, ist das flexible Abdeckelement 64 an allen über die Grundplatte 58 vorstehenden Endbereichen in den Aufnahmeschlitzen 70 aufgenommen und in der Mitte von der Grundplatte 58 abgestützt, so dass es eine erhebliche Tragfähigkeit für Stückgüter aufweist, die in den Zwischenraum zwischen den benachbarten Lastaufnahmeelementen 40 geraten.

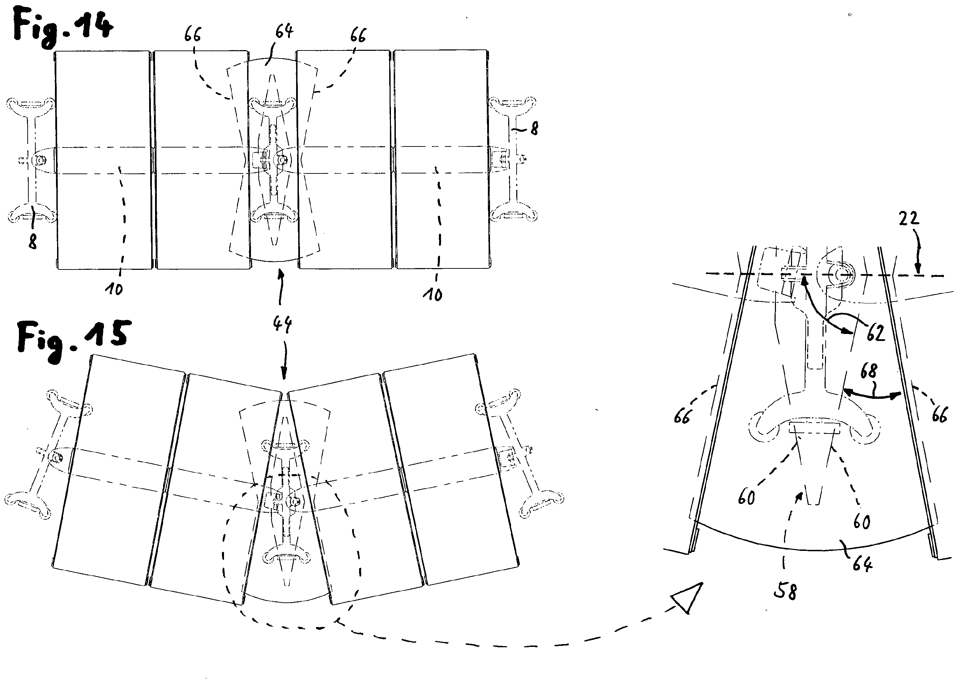

Fig. 14 und 15 zeigen die Anordnung des flexiblen Abdeckelements 64, dass einerseits fest von der Grundplatte 58 abgestützt und andererseits beweglich von den Aufnahmeschlitzen 70 der Lastaufnahmeelemente 40 aufgenommen und abgestützt ist, in einer Draufsicht, wobei Fig. 14 eine Geradeausfahrt und Fig. 15 eine Kurvenfahrt der Führungseinheit 8 entlang eines kleinsten Krümmungsradius der Fahrbahn zeigt. Bei Geradeausfahrt gemäß Fig.14 ist ein rechteckförmiger Zwischenraum 72 zwischen seitlichen Rändern 42 von zwei unmittelbar benachbarten Lastaufnahmeelementen 40 vorhanden, innerhalb dessen, in Draufsicht gesehen, sich die Grundplatte 58 der Zwischenabdeckung 44 befindet. Bei Kurvenfahrt gemäß Fig. 15 befinden sich die seitlichen Ränder 42 der Lastaufnahmeelemente 40 unter einem Winkel zueinander, der dem Zweifachen des vorstehend beschriebenen Winkels 62 entspricht, unter dem die Seitenränder 60 der Grundplatte 58 zur Längsrichtung der Führungseinheit 8 ausgerichtet sind.

Die flexiblen Abdeckelemente 64 sind so bemessen, dass sie sich bei jeder möglichen Kurvenfahrt der Fahrwagen 2 noch teilweise innerhalb der Aufnahmeschlitze 70 der angrenzenden Lastaufnahmeelemente 40 befinden, so dass eine belastbare Abdeckung des Zwischenraums 72 zwischen benachbarten Lastaufnahmeelementen 40 sichergestellt ist.

Beim Durchfahren einer vertikalen Krümmung oder Kurve der Fahrbahn 4 liegen die Oberseiten benachbarter Lastaufnahmeelemente 40 nicht mehr in einer Ebene, so dass die über die Grundplatte 58 vorstehenden Teile des Abdeckelements 64 aufgrund ihrer Aufnahme und Führung in den Aufnahmeschlitzen der Lastaufnahmeelemente einer Biegung unterworfen werden. Dabei bleibt der Zwischenraum 72 zwischen den Lastaufnahmeelementen praktisch vollständig abgedeckt, ebenso wie bei einer ebenen Kurvenfahrt.

Die Ausführung nach Fig. 9 bis 11 entspricht Anspruch 1. Alternativ könnte gemäß Anspruch 2 auf jeder Führungseinheit ein Lastaufnahmeelement und auf jeder Trageinheit eine Zwischenabdeckung gehalten sein.

### Bezugszeichenliste

- 2: Fahrwagen
- 4: Fahrbahn
- 6: Fahrschiene
- 8: Führungseinheit
- 10: Trageinheit
- 10 a: Längsachse (von 10)
- 12: Koppelgelenk
- 12a: Schwenkachse
- 14: Wagenkörper
- 16: Tragrolle
- 16a: Drehachse
- 18: Führungsrolle
- 18a: Drehachse
- 20: Förderrichtung
- 22: Längsrichtung (von 8)
- 24: Fahrbahnebene
- 26: Verbindungsgelenk
- 28: Hochachse
- 30: Querachse
- 32: Längsachse
- 34: Tragbahn
- 36: Führungsbahn
- 40: Lastaufnahmeelement (Quergurtelement)
- 42: Seitenrand (von 40)
- 44: Zwischenabdeckung
- 50: Reaktionsteil
- 50a, b: Reaktionsteil
- 52: Montageelement
- 52a: Strebe
- 54: Tragplatte
- 58: Grundplatte
- 60: Seitenrand (von 58)
- 62: Winkel (zwischen 60 und 22)
- 64: Abdeckelement
- 66: Seitenrand (von 64)
- 68: Winkel (zwischen 66 und 60)
- 70: Aufnahmeschlitz
- 72: Zwischenraum
- a: Gelenkpunktabstand (Fahrwagenteilung)
- b: Koppelgelenkabstand
- c: Verbindungsgelenkabstand
- d: Führungsrollenabstand
- e: Querabstand

## Patentansprüche

1. Sortierförderer mit einer Reihe von gelenkig miteinander verbundenen, entlang einer Fahrbahn (4) geführten und verfahrbaren Fahrwagen (2), die jeweils eine Führungseinheit (8) und eine damit gelenkig verbundene Trageinheit (10) aufweisen, wobei jede Führungseinheit (8) auf jeder Seite an übereinstimmenden Längspositionen eine Tragrolle (16) zum Zusammenwirken mit der Fahrbahn (4) aufweist, wobei zwischen der Führungseinheit (8) und der Trageinheit (10) eines jeden Fahrwagens (2) ein schwenkbares Koppelgelenk (12) angeordnet ist, wobei jeder Tragrolle (16) zwei Führungsrollen (18) zugeordnet sind, von denen eine erste an einer ersten Längsposition mit Abstand vor und eine zweite an einer zweiten Längsposition mit Abstand hinter der jeweiligen Tragrolle (16) angeordnet ist, wobei zwischen benachbarten Fahrwagen (2) ein in jeder Richtung drehbares Verbindungsgelenk (26) angeordnet ist, wobei auf zwei mit einer Führungseinheit (8) verbundenen Trageinheiten (10) jeweils ein Lastaufnahmeelement (40) angeordnet und zwischen den Lastaufnahmeelementen (40) ein Zwischenraum (72) gebildet ist, wobei auf der Führungseinheit (8) eine Zwischenabdeckung (44) gehalten ist, mit der der Zwischenraum (72) zwischen den Lastaufnahmeelementen (40) wenigstens teilweise abgedeckt ist, **dadurch gekennzeichnet, dass** die Zwischenabdeckung (44) ein flexibles Abdeckelement (64) umfasst, das an einer auf der Führungseinrichtung (8) befestigten, starren Grundplatte (58) gehalten ist, wobei das Abdeckelement (64) mindestens bereichsweise über die Grundplatte (58) vorsteht und an seinen von der Grundplatte (58) vorstehenden Endbereichen in Aufnahmeschlitzen (70) benachbarter Lastaufnahmeelemente (40) aufgenommen und abgestützt ist.

2. Sortierförderer mit einer Reihe von gelenkig miteinander verbundenen, entlang einer Fahrbahn (4) geführten und verfahrbaren Fahrwagen (2), die jeweils eine Führungseinheit (8) und eine damit gelenkig verbundene Trageinheit (10) aufweisen, wobei jede Führungseinheit (8) auf jeder Seite an übereinstimmenden Längspositionen eine Tragrolle (16) zum Zusammenwirken mit der Fahrbahn (4) aufweist, wobei zwischen der Führungseinheit (8) und der Trageinheit (10) eines jeden Fahrwagens (2) ein schwenkbares Koppelgelenk (12) angeordnet ist, wobei jeder Tragrolle (16) zwei Führungsrollen (18) zugeordnet sind, von denen eine erste an einer ersten Längsposition mit Abstand vor und eine zweite an einer zweiten Längsposition mit Abstand hinter der jeweiligen Tragrolle (16) angeordnet ist, wobei zwischen benachbarten Fahrwagen (2) ein in jeder Richtung drehbares Verbindungsgelenk (26) angeordnet ist, wobei auf zwei mit einer Trageinheit (10) verbundenen Führungseinheiten (8) jeweils ein Lastaufnahmeelement (40) angeordnet und zwischen den Lastaufnahmeelementen (40) ein Zwischenraum (72) gebildet ist, wobei auf der Trageinheit (10) eine Zwischenabdeckung (44) gehalten ist, mit der der Zwischenraum (72) zwischen den Lastaufnahmeelementen (40) wenigstens teilweise abgedeckt ist, **dadurch gekennzeichnet, dass** die Zwischenabdeckung (44) ein flexibles Abdeckelement (64) umfasst, das an einer auf der Führungseinrichtung (8) befestigten, starren Grundplatte (58) gehalten ist, wobei das Abdeckelement (64) mindestens bereichsweise über die Grundplatte (58) vorsteht und an seinen von der Grundplatte (58) vorstehenden Endbereichen in Aufnahmeschlitzen (70) benachbarter Lastaufnahmeelemente (40) aufgenommen und abgestützt ist.

3. Sortierförderer nach Anspruch 1 oder 2, **dadurch gekennzeichnet, dass** das Verbindungsgelenk (26) und das Koppelgelenk (12) jeweils an Längspositionen außerhalb eines Bereiches zwischen der ersten und der zweiten Längsposition der Führungsrollen (18), an dieser Längsposition oder an einer übereinstimmenden Längsposition mittig dazwischen angeordnet sind.

4. Sortierförderer nach einem der vorhergehenden Ansprüche, **dadurch gekennzeichnet, dass** die Grundplatte (58) in Richtung der Schwenkachse (12a) gesehen einen rautenförmigen Grundriss aufweist.

5. Sortierförderer nach einem der vorhergehenden Ansprüche, **dadurch gekennzeichnet, dass** das Koppelgelenk (12) um eine senkrecht zur Fahrbahnebene (24) angeordnete Schwenkachse (12a) schwenkbar ist, wobei die Grundplatte (58) senkrecht zu der Schwenkachse (12a) angeordnet ist.

6. Sortierförderer nach Anspruch 4 oder 5, **dadurch gekennzeichnet, dass** Seitenränder (60) der Grundplatte (58) bezüglich einer Längsrichtung (22) der Führungseinrichtung (8) unter einem Winkel (62) von weniger als 90 Grad angeordnet sind, wobei der Winkel (62) einer größten Relativdrehung der Führungseinheit (8) bezüglich einer benachbarten Trageinheit (40) bei Kurvenfahrt entspricht.

7. Sortierförderer nach einem der vorangehenden Ansprüche, **dadurch gekennzeichnet, dass** die Fahrbahn (4) horizontale und/oder vertikale Krümmungen aufweist.

8. Sortierförderer nach einem der vorangehenden Ansprüche, **dadurch gekennzeichnet, dass** die Führungseinheiten (8) und/oder die Trageinheiten (10) ein Reaktionsteil (50; 50a, b) zur Übertragung von Antriebskräften aufweisen.

9. Sortierförderer nach Anspruch 8, **dadurch gekennzeichnet, dass** das Reaktionsteil (50; 50a, b) als Stator oder Antriebsteil eines Linearmotors ausgebildet ist, wobei das jeweils andere Antriebselement im Bereich der Fahrbahn (4) angeordnet ist oder durch diese gebildet wird.

10. Sortierförderer nach Anspruch 9, **dadurch gekennzeichnet, dass** die Reaktionsteile (50; 50a, b) als flache, senkrecht und in Förderrichtung (20) orientierte Bauteile gebildet sind, deren in Förderrichtung (20) weisende Enden im Bereich eines Verbindungsgelenks (26) kreissegmentförmig abgerundet sind und einen engen Spalt zu einem benachbarten Reaktionsteil (50; 50a, b) bilden.

11. Sortierförderer nach einem der vorangehenden Ansprüche, **dadurch gekennzeichnet, dass** die Lastaufnahmeelemente (40) mechanisch oder elektrisch betätigte Kippelemente oder Quergurtelemente sind.

## Claims

1. Sorting conveyor with a series of carriages (2) linked together in an articulated way, which are guided and capable of travelling along a track (4), and each of which has a guide unit (8) and carrier unit (10) linked to it in an articulated way, wherein each guide unit (8) has, in matching longitudinal positions on each side, a support roller (16) for cooperating with the track (4), wherein between the guide unit (8) and the carrier unit (10) of each carriage (2) there is disposed a rotatable coupling joint (12) and wherein each support roller (16) has associated with it two guide rollers (18), a first one of which is disposed in a first longitudinal position at a specific distance before and a second one of which is disposed in a second longitudinal position at a specific distance behind the respective support roller (16), wherein a connecting joint (26), rotatable in each direction, is arranged between adjacent carriages (2), a load-bearing member (40) being disposed in each case on two carrier units (10) connected to a guide unit (8) and a gap (72) being formed between the load-bearing members (40), wherein an intermediate cover (44) is held on the guide unit (8), with which the gap (72) between the load-bearing members (40) is at least partly covered, **characterized in that** the intermediate cover (44) comprises a flexible cover member (64), which is held on a rigid baseplate (58) fastened to the guide unit (8), the cover member (64) at least partly protruding over the baseplate (58) and in its end regions protruding from the baseplate (58) being retained and supported by mounting slots (70) of adjacent load-bearing members (40).

2. Sorting conveyor with a series of carriages (2) linked together in an articulated way, which are guided and capable of travelling along a track (4), and each of which has a guide unit (8) and carrier unit (10) linked to it in an articulated way, wherein each guide unit (8) has, in matching longitudinal positions on each side, a support roller (16) for cooperating with the track (4), wherein between the guide unit (8) and the carrier unit (10) of each carriage (2) there is disposed a rotatable coupling joint (12) and wherein each support roller (16) has associated with it two guide rollers (18), a first one of which is disposed in a first longitudinal position at a specific distance before and a second one of which is disposed in a second longitudinal position at a specific distance behind the respective support roller (16), wherein a connecting joint (26), rotatable in each direction, is arranged between adjacent carriages (2), a load-bearing member (40) being disposed in each case on two guide units (8) connected to a carrier unit (10) and a gap (72) being formed between the load-bearing members (40), wherein an intermediate cover (44) is held on the carrier unit (10), with which the gap (72) between the load-bearing members (40) is at least partly covered, **characterized in that** the intermediate cover (44) comprises a flexible cover member (64), which is held on a rigid baseplate (58) fastened to the guide unit (8), the cover member (64) at least partly protruding over the baseplate (58) and in its end regions protruding from the baseplate (58) being retained and supported by mounting slots (70) of adjacent load-bearing members (40).

3. Sorting conveyor according to claim 1 or 2, **characterized in that** the connecting joint (26) and the coupling joint (12) in each case are disposed in longitudinal positions outside a region between the first and the second longitudinal position of the guide rollers (18), at this longitudinal position or at a matching longitudinal position centrally in-between.

4. Sorting conveyor according to one of the preceding claims, **characterized in that** the baseplate (58) exhibits a rhombic outline seen towards the rotation axis (12a).

5. Sorting conveyor according to one of the preceding claims, **characterized in that** there is disposed a coupling joint (12) which can rotate around a rotation axis (12a) aligned perpendicularly to a plane of the track (24), wherein the baseplate (58) is arranged vertically to the rotation axis (12a).

6. Sorting conveyor according to claim 4 or 5, **characterized in that** side edges (60) of the baseplate (58) relative to a longitudinal direction (22) of the guide unit (8) are arranged at an angle (62) of less than 90 degrees, wherein the angle (62) corresponds to a maximum relative turn of the guide unit (8) in relation to an adjacent carrier unit (40) when moving along curves.

7. Sorting conveyor according to one of the preceding claims, **characterized in that** the track (4) has horizontal and/or vertical bends.

8. Sorting conveyor according to one of the preceding claims, **characterized in that** the guide units (8) and/or the carrier units (10) possess a reaction part (50; 50a, b) for transmitting drive forces.

9. Sorting conveyor according to claim 8, **characterized in that** the reaction part (50; 50a, b) takes the form of a stator or drive part of a linear motor, wherein the respective other drive part is disposed in the region of the track (4) or is formed thereby.

10. Sorting conveyor according to claim 9, **characterized in that** the reaction parts (50; 50a, b) take the form of flat components, aligned vertically and in the direction of conveyance (20), the ends of which facing in the direction of conveyance (20) being rounded in the shape of a segment of a circle in the region of a connecting joint (26) and forming a narrow gap to an adjacent reaction part (50; 50a, b).

11. Sorting conveyor according to one of the preceding claims, **characterized in that** the load-bearing members (40) are mechanically or electrically actuated tilting members or transverse rib members.

## Revendications

1. Appareil de convoyage de triage composé de toute une série de wagons (2) liés les uns aux autres avec un attelage articulé et guidés et en mesure de se déplacer le long d'une voie (4) et chacun d'entre eux a un groupe de guidage (8) et un groupe de transport (10) qui y est relié par un attelage articulé ; chaque groupe de guidage (8) a, en plusieurs points longitudinaux appairés, de part et d'autre, un rouleau de support (16) qui coopère avec la voie (4) ; en outre, entre le groupe de guidage (8) et le groupe de transport (10) de chaque wagon (2) un joint rotatif de couplage (12) est implanté et chaque rouleau de support (16) est associé à deux rouleaux de guidage (18) ; le premier d'entre eux est disposé dans un premier sens longitudinal, à une certaine distance antérieure, alors que le deuxième est disposé dans un deuxième sens longitudinal, à une certaine distance après le rouleau respectif de support (16) ; qui plus est, un joint de raccordement (26), qui tourne dans chaque sens, est implanté entre des wagons adjacents (2), et un élément porteur de charge (40) est positionné, dans chaque cas, sur deux groupes de transport (10) raccordés à un groupe de guidage (8) et un écart (72) se crée entre les éléments porteurs de charges (40) ; de plus, un couvercle intermédiaire (44) est maintenu en place sur le groupe de guidage (8), de telle sorte que l'écart (72) entre les éléments porteurs de charges (40) est au moins partiellement protégé par ce couvercle et se **caractérise par** un couvercle intermédiaire (44) qui se compose d'un élément flexible de couvercle (64), qui vient se fixer sur un socle rigide (58) rattaché au groupe de guidage (8), alors que l'élément flexible du couvercle (64) fait au moins partiellement saillie par rapport au socle (58) alors qu'au niveau de ses extrémités il fait saillie par rapport au socle (58) et est fixé et soutenu par des encoches de fixation (70) dans les éléments adjacents porteurs de charges (40).

2. Appareil de convoyage de triage composé de toute une série de wagons (2) liés les uns aux autres avec un attelage articulé et guidés et en mesure de se déplacer le long d'une voie (4) et chacun d'entre eux a un groupe de guidage (8) et un groupe de transport (10) qui y est relié par un attelage articulé ; chaque groupe de guidage (8) a, en plusieurs points longitudinaux appairés, de part et d'autre, un rouleau de support (16) qui coopère avec la voie (4) ; en outre, entre le groupe de guidage (8) et le groupe de transport (10) de chaque wagon (2) un joint rotatif de couplage (12) est implanté et chaque rouleau de support (16) est associé à deux rouleaux de guidage (18) ; le premier d'entre eux est disposé dans un premier sens longitudinal, à une certaine distance antérieure, alors que le deuxième est disposé dans un deuxième sens longitudinal, à une certaine distance après le rouleau respectif de support (16) ; qui plus est, un joint de raccordement (26), qui tourne dans chaque sens, est implanté entre des wagons adjacents (2), et un élément porteur de charge (40) est positionné, dans chaque cas, sur deux groupes de guidage (8) raccordés à un groupe de transport (10) et un écart (72) se crée entre les éléments porteurs de charges (40) ; de plus, un couvercle intermédiaire (44) est maintenu en place sur le groupe de transport (10), de telle sorte que l'écart (72) entre les éléments porteurs de charges (40) est au moins partiellement protégé par ce couvercle et se **caractérise par** un couvercle intermédiaire (44) qui se compose d'un élément flexible de couvercle (64), qui vient se fixer sur un socle rigide (58) rattaché au groupe de guidage (8), alors que l'élément flexible du couvercle (64) fait au moins partiellement saillie par rapport au socle (58) alors qu'au niveau de ses extrémités il fait saillie par rapport au socle (58) et est fixé et soutenu par des encoches de fixation (70) dans les éléments adjacents porteurs de charges (40).

3. L'appareil de convoyage de triage que décrit la revendication 1 ou 2 et qui se **caractérise par le fait que** le joint de raccordement (26) et le joint de couplage (12), dans chaque cas, sont disposés à des emplacements longitudinaux se situant en dehors d'une zone localisée entre la première position longitudinale et la deuxième position longitudinale des rouleaux de guidage (18), à cette position longitudinale ou à une position longitudinale correspondante centrée entre les deux.

4. L'appareil de convoyage de triage que décrit l'une des revendications précédentes et qui se **caractérise par le fait que** le socle (58) présente un profil rhombique visible vers l'axe de rotation (12a).

5. L'appareil de convoyage de triage que décrit l'une des revendications précédentes et qui se **caractérise par le fait qu'**un joint de couplage (12) est implanté et peut tourner autour d'un axe de rotation (12a) qui s'aligne perpendiculairement à un plan de la voie (24), alors que le socle (58) est disposé à la verticale de cet axe de rotation (12a).

6. L'appareil de convoyage de triage que décrit la revendication 4 ou 5 et qui se **caractérise par le fait que** les bords latéraux (60) du socle (58) par rapport à un sens longitudinal (22) du groupe de guidage (8) sont disposés sous un angle (62) inférieur à 90 degrés, et si ce n'est que cet angle (62) correspond à un virage relatif maximal du groupe de guidage (8) par rapport à un groupe adjacent de transport (40) lors du déplacement le long de courbes.

7. L'appareil de convoyage de triage que décrit l'une des revendications précédentes et qui se **caractérise par le fait que** la voie (4) a des courbes horizontales et (ou) verticales.

8. L'appareil de convoyage de triage que décrit l'une des revendications précédentes et qui se **caractérise par le fait que** les groupes de guidage (8) et (ou) les groupes de transport (10) possèdent un élément de réaction (50 ; 50a, b) qui transmet les forces motrices.

9. L'appareil de convoyage de triage que décrit la revendication 8 et qui se **caractérise par le fait que** l'élément de réaction (50 ; 50a, b) se présente sous la forme d'un stator ou d'un composant qui fait partie d'un moteur linéaire et si ce n'est que l'autre partie motrice respective est implantée dans la zone de la voie (4) ou y est profilée.

10. L'appareil de convoyage de triage que décrit la revendication 9 et qui se **caractérise par le fait que** les éléments de réaction (50 ; 50a, b) se présentent sous la forme de composants plats, alignés sur le plan vertical et dans le sens de l'acheminement (20) et dont les extrémités qui font face au sens de l'acheminement (20) sont arrondies, ont le profil d'un segment de cercle dans la zone d'un joint de raccordement (26) et constituent un écart étroit par rapport à un composant adjacent de réaction (50 ; 50a, b).

11. L'appareil de convoyage de triage que décrit l'une des revendications précédentes et qui se **caractérise par le fait que** les éléments porteurs de charges (40) sont des éléments pendulaires à commande mécanique ou électrique ou des éléments à nervures transversales.
